(19)

Europäisches Patentamt
European Patent Office
Office européen des brevets

(11) **EP 4 000 009 B1**

(12) **EUROPEAN PATENT SPECIFICATION**

(45) Date of publication and mention
of the grant of the patent:
**19.03.2025   Bulletin 2025/12**

(21) Application number: **20743112.3**

(22) Date of filing: **16.07.2020**

(51) International Patent Classification (IPC):
**G06N 3/092** *(2023.01)*        **G06N 3/094** *(2023.01)*
**G06N 3/045** *(2023.01)*        G06N 3/008 *(2023.01)*
**G06N 3/084** *(2023.01)*

(52) Cooperative Patent Classification (CPC):
**G06N 3/045; G06N 3/092; G06N 3/094;**
G06N 3/008; G06N 3/044; G06N 3/084

(86) International application number:
**PCT/EP2020/070164**

(87) International publication number:
**WO 2021/009293 (21.01.2021 Gazette 2021/03)**

(54) **TRAINING A NEURAL NETWORK TO CONTROL AN AGENT USING TASK-RELEVANT ADVERSARIAL IMITATION LEARNING**

TRAINIEREN EINES NEURONALEN NETZES ZUR STEUERUNG EINES AGENTEN UNTER VERWENDUNG VON AUFGABENRELEVANTEM GEGNERISCHEM IMITATIONSLERNEN

FORMATION D'UN RÉSEAU NEURONAL POUR COMMANDER UN AGENT À L'AIDE D'UN APPRENTISSAGE D'IMITATION PUBLICITAIRE APPROPRIÉ POUR UNE TÂCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.07.2019   US 201962875459 P**

(43) Date of publication of application:
**25.05.2022   Bulletin 2022/21**

(73) Proprietor: **DeepMind Technologies Limited London EC4A 3TW (GB)**

(72) Inventors:
• **ZOLNA, Konrad**
  **London N1C 4AG (GB)**
• **REED, Scott Ellison**
  **Mountain View, California 94043 (US)**
• **WANG, Ziyu**
  **London N1C 4AG (GB)**
• **NOVIKOV, Alexander**
  **London N1C 4AG (GB)**
• **COLMENAREJO, Sergio Gomez**
  **London N1C 4AG (GB)**
• **GOMES DE FREITAS, Joao Ferdinando**
  **London N1C 4AG (GB)**

• **BUDDEN, David**
  **London N1C 4AG (GB)**
• **CABI, Serkan**
  **London N1C 4AG (GB)**

(74) Representative: **Marks & Clerk GST**
**1 New York Street**
**Manchester M1 4HD (GB)**

(56) References cited:
**US-A1- 2019 126 472**

• **XUE BIN PENG ET AL: "Variational Discriminator Bottleneck: Improving Imitation Learning, Inverse RL, and GANs by Constraining Information Flow", ARXIV.ORG, CORNELL UNIVERSITY LIBRARY, 201 OLIN LIBRARY CORNELL UNIVERSITY ITHACA, NY 14853, 29 December 2018 (2018-12-29), XP080999391**
• **BRADLY C STADIE ET AL: "Third-Person Imitation Learning", ARXIV.ORG, CORNELL UNIVERSITY LIBRARY, 201 OLIN LIBRARY CORNELL UNIVERSITY ITHACA, NY 14853, 6 March 2017 (2017-03-06), XP080754419**

EP 4 000 009 B1

**(Cont. next page)**

- **JONATHAN HO ET AL: "Generative Adversarial Imitation Learning", ADVANCES IN NEURAL INFORMATION PROCESSING SYSTEMS 29, 5 December 2016 (2016-12-05), pages 4565 - 4573, XP055739619**

**Description**

BACKGROUND

This specification relates to methods and systems for training a neural network to control an agent to carry out a task in an environment.

The training is in the context of an imitation learning system, in which the neural network is trained to control an agent to perform a task using data characterizing instances in which the task has previously been performed by an agent under the control of an expert, such as a human user or another robot. US 2019/126472 A1 discloses a neural network control system for controlling an agent to perform a task in a real-world environment, which operates based on both image data and proprioceptive data describing the configuration of the agent. The training of the control system includes both imitation learning, using datasets generated from previous performances of the task, and reinforcement learning based on rewards calculated from control data output by the control system.

SUMMARY

This specification generally describes how a system implemented as computer programs in one or more computers in one or more locations can perform a method to train (that is, adjust the parameters of) an adaptive system ("neural network") used to select actions to be performed by an agent interacting with an environment.

In broad terms a reinforcement learning (RL) system is a system that selects actions to be performed by a reinforcement learning agent, or simply agent, interacting with an environment. In order for the agent to interact with the environment, the system receives data characterizing the current state of the environment and selects an action to be performed by the agent in response to the received data. Data characterizing (at least partially) a state of the environment is referred to in this specification as "state data", or an "observation". The environment may be a real-world environment, and the agent may be an agent which operates on the real-world environment. For example, the agent may be a mechanical or electromechanical system (e.g., a robot) located in the environment and comprising one or more members connected together using joints which permit relative motion of the members, and one or more drive mechanisms which control the relative position of the members. The reinforcement learning system is trained using a "reward value" which characterizes each action selected to be performed by the agent. The reward value may be obtained from a function ("reward function") based on the state data.

The training method may make use of a simulated agent moving within a simulated environment. The simulated agent may have a simulated motion within the simulated environment which mimics the motion of the robot in the real environment. Thus the term "agent" is used to embrace both a real agent (robot) and a simulated agent, and the term "environment" is used to embrace both types of environment.

In the case that the environment is a real world environment, the state data may be collected by one or more sensors. For example the (or each) sensor may be a camera configured to collect images (still images or video images) of the real-world environment. In some cases, the agent is located within the environment, and although the agent is not considered a component of the environment, the state data may include information about the agent. For example, in the case that the state data is an image collected by a camera, the image may include an image of at least a part of the agent. The state data may further comprise proprioceptive data describing the configuration of the agent. For example, the proprioceptive features may be positions and/or velocities of the members of the agent.

In general terms, the present disclosure proposes that a neural network for generating action data for controlling an agent which operates on an environment, is adaptively trained together with a discriminator network. The training employs pre-existing first tuple datasets (or more simply first "tuples"), each containing state data characterizing the state of the environment at that time. The neural network is trained by reinforcement learning, with a reward function comprising an imitation value output by the discriminatory network. The training further employs second tuple datasets (or more simply, second tuples), which comprise state data received by the neural network and used by the neural network to generate corresponding action data. During the training, the neural network and the discriminator are both iteratively trained, by concurrent or interleaved neural network update steps and discriminator network update steps. The discriminator network is trained to produce a higher imitation value upon receiving one of the first tuple datasets than it does upon receiving one of the second tuple datasets; in other words, to be able to correctly label a tuple dataset it receives as a first tuple dataset or a second tuple dataset. However, the training of the discriminator network is subject to the constraint (limitation) that, for certain "invariant" first and second tuple datasets (i.e., first and second subsets respectively of the first and second tuple datasets used in the training method), the imitation value labels at least a certain proportion of those tuple datasets incorrectly. In other words, the imitation value which the discriminator network produces upon receiving one of those invariant tuple datasets as an input, does not correctly label them in an informative way. For example, the imitation values may be constrained to be "wrong" (i.e., below a certain imitation value threshold for a first tuple dataset, and above the imitation value threshold for a second tuple dataset) for a certain proportion of the tuple datasets included in the first and second subsets, e.g., for half of them, or even for all of them. The first subset of first tuple datasets may be tuple datasets which are less informative about how to perform the task than one or more other of the first tuple datasets, and the second subset of second tuple datasets may be tuple datasets which are less informative about how to perform the task than one or more other of the second tuple datasets.

It has been found that constraining the adaptive training of the discriminator network in this way makes it less likely that the discriminator network will learn to distinguish between the first and second tuple datasets using characteristics of those tuple datasets which are not relevant to the task being performed. Such characteristics might for example include the presence in the environment of objects which are not involved in the task, or other irrelevant properties of the environment, such as how well lit it is or what color the agent is. Since characteristics of this kind are typically common to all the first tuple datasets (including the first subset of first tuple datasets), and all the second tuple datasets (including the second subset of first tuple datasets), the constraint on the learning explained above discourages the discriminator unit from using such characteristics, and therefore encourages the discriminator to distinguish first tuple datasets from second tuple datasets based on characteristics of the state data which are relevant to the task, since these characteristics are exhibited to a different degree by different ones of the first tuple datasets, and by different ones of the second tuple datasets. This means that the discriminator network is better at producing an imitation value for the first and second tuple datasets which are not in the subsets which is based on characteristics of those tuple datasets which are relevant to the task being learnt.

The disclosed method thus has the advantage that the task can be learnt more successfully for a given amount of technical resources. That is, it permits a reduction in computational time and processing steps to produce a control system for the agent which performs the task to a given accuracy.

Furthermore, the disclosed method makes it possible to achieve higher performance of the task for a given number of first tuple datasets. This is critical because, particularly in cases in which the agent is an electromechanical system (e.g., a robot) operating in a real environment, collecting the first tuple datasets can be expensive and time-consuming. The proposed techniques reduce the risk that, for a given number of first tuple datasets, the training of the neural network overfits these first tuple datasets, leading to reduced generalization ability, and therefore inefficient control of the robot. Experimentally the present technique has been found to permit considerably improved robot control.

As noted above, one way of implementing the constraint is by ensuring that, upon receiving any of at least a specified proportion of tuple datasets included in the first and second subsets, the discriminator network generates (i) an imitation value below an imitation value threshold if the received tuple dataset is a first tuple dataset, and (ii) an imitation value above the imitation value threshold if the received tuple dataset is a second tuple dataset. For example, in the case that the discriminator network is adapted, upon receiving an input tuple dataset, to generate an output in a certain range (which without loss of generality we can refer as 0 to 1, where 1 corresponds to high confidence that the input tuple dataset is a first tuple dataset, and 0 corresponds to high confidence that the input tuple dataset input to the discriminator network is a second tuple dataset), the imitation value threshold may be equal to one half. Similarly, the predetermined proportion of tuple datasets may be set equal to one half. Thus, for at least half the tuple datasets in the first and second subsets the discriminator network outputs the "wrong" label upon receiving the tuple dataset as an input.

Numerically, a constraint of this kind can be implemented by adapting the discriminator network by maximizing a function which includes a term which varies inversely with an accuracy term (which may be multiplied by a hyper-parameter referred to here as $\lambda$). The accuracy term indicates proportion of tuple datasets of the first and second subsets for which the discriminator network applies the correct label. For example, the accuracy parameter takes a higher value if, upon receiving one of the first subset of first tuple datasets, the discriminator network generates an imitation value above the imitation value threshold. Similarly, the accuracy parameter takes a higher value if, upon receiving one of the second subset of second tuple datasets, the discriminator network generates an imitation value below the imitation value threshold.

Optionally, the first tuples may further comprise action data generated by the expert based for controlling the agent, based on the state data in the first tuple. Similarly, the second tuple may include action data generated by the neural network for controlling the agent, based on the state data in the second tuple.

In other implementations, however the first and second tuples do not comprise this action data. This has the advantage that these implementations are applicable to situations in which there is no access to the action data generated by the expert, or that it is different from the sort of action data which the neural network has to generate (e.g. because the expert is provided with a control system which differs significantly from the control system which receives the action data generated by the neural network). Note that, as pointed out above, the state data itself may give some information about the agent, so the reinforcement learning system is not entirely dependent upon the action data in order to obtain information about the agent.

Preferably the first subset of the first tuple datasets, and the second subset of the second tuple datasets are ones which are chosen such as to be relatively uninformative about the performance of the task. For example, they may be tuple datasets at the beginning of the performance of the task respectively controlled by the expert and by the neural network (e.g., the first 10 frames in the case that the state data is data from a video camera, and one tuple dataset is generated per frame).

The first tuple datasets may be in groups, such that each group of first tuple datasets relates to a single performance of the task. That is, each group of first tuple datasets may be a sequence of first tuple datasets describing a previous performance of the task by the agent under the control of an expert who is aware of the state of the environment, e.g., because of having access to the state data. This group of first tuples is referred to an "expert sequence". For each performance of the task, the corresponding expert sequence is a sequence of first tuple datasets labelled by a time index which is zero for the first tuple dataset of the sequence (for which the state data characterizes an initial state of the environment), and one higher for each successive first tuple dataset than for the preceding one of the sequence. The first subset of first tuple datasets may be those first tuple datasets for which the corresponding time index is below a first time threshold.

Similarly, the second tuple datasets are grouped into sequences ("action sequences") showing an attempt by the reinforcement learning system to control the agent to perform the task. Each action sequence includes a second tuple dataset which has a time index of zero, and for which the state data describes the environment in a corresponding initial state; and each other second tuple dataset of the action sequence has a time index one greater than the preceding one of the action sequence, and comprises state data describing the environment upon the performance by the agent of the action data generated in the preceding time step. Optionally, at least one complete action sequence may be performed in each of the neural network update steps.

The second subset of second tuple datasets may be those second tuple datasets for which the corresponding time index is below a second time threshold.

The first and second time thresholds may be the same, e.g., each may be equal to about 10.

One situation in which the discriminator may learn to distinguish between the first and second tuple datasets based on task-irrelevant characteristics is when the first and second tuple datasets both represent successful performance of the task, so that the differences between them are inherently not relevant to the task. This situation is more likely to arise toward the end of a reinforcement learning session. To reduce the risk of this occurring, in the discriminator network update steps all the second tuple datasets may be tuple datasets relating to the start of the performance of the task by the agent.

One way of ensuring this would be for all the second tuple datasets used in the discriminator network update steps to be ones for which the corresponding time index is below a third time threshold, i.e., the threshold may be the same for every sequence of second tuple datasets. This third threshold may be lower than the number of first tuple datasets in some or all of the expert sequences.

However, an approach which has been found experimentally to lead to better results (i.e., the neural network which the method produces for a given amount of computer resources used in the training, is able to control the agent to perform the task better) is to arrange for the number of second tuples to be different for each action sequence. In effect, for each action sequence, there is a corresponding third time threshold, and the plurality of the second tuple datasets are second tuple datasets used in the discriminator network update steps are second tuples for which the corresponding time index is below the corresponding third time threshold. Preferably, for all the action sequences the third time threshold (i.e. the number of second tuple datasets in that action sequence) is below the number of first tuples in some or all of the expert sequences.

Optionally, the third time threshold for each action sequence may be selected based on imitation values for the second tuple datasets of the sequence. For example, the third time threshold may be set as the smallest time index such that the imitation value of the corresponding action sequence at the third time threshold, and optionally for a certain number of immediately preceding time indices, is above an imitation quality threshold. The imitation quality threshold may be based on the imitation values of a plurality of second tuples for that action sequence.

A further technique which may be employed, with the same objective of avoiding the discriminator concentrating on features of the tuple datasets which are irrelevant to the task, is for the state data in the tuple datasets used in one or more of the neural network update steps, and/or in one or more of the discriminator network update steps, to be modified randomly. That is, the update steps may use, instead of the first or second tuple datasets, modified versions in which the state data is subject to a modification. The modification may be different for different ones of the neural network and/or discriminator network update steps. In other words, each update step may begin with a step of modifying the tuple datasets which the update step uses to form a modified version of each of those tuple databases, with each modification to each tuple database being selected independently, e.g., from a random distribution. One or more of the modified tuples may replace the corresponding unmodified tuples in the corresponding database, and/or one or more of the modified tuples may be added to the corresponding database. This is analogous to traditional regularization and is referred to as data augmentation.

For example, if the state data comprises image data (i.e., obtained by camera such as video cameras capturing image), the modification may comprise applying to the image data one or more modifications selected from the set comprising: brightness changes; contrast changes; saturation changes; cropping; rotation; and addition of noise. Similarly, if the image data of a given tuple dataset defines multiple images (e.g. captured by respective cameras in different locations), one or more of those images may be removed, though preferably at least one image is not removed. The concept of data augmentation to improve a tuple database used for training a discriminator which is employed in a reinforcement learning system constitutes an independent aspect of the present disclosure, which may be used even if the concept of invariant tuple datasets is not employed.

The training of the neural network may be performed as part of a process which includes, for a certain task:

performing the task (e.g., under control of an expert) a plurality of times and collecting the respective sequences of first tuple datasets characterizing the performances;
initializing a neural network;
training the neural network by the technique described above; and
using the neural network to control an agent (e.g., a real-world agent) to perform the task in an environment, e.g., based on observation data collected by at least one sensor, such as a (still or video) camera for collecting image data.

The neural network itself may take many forms. In one form, the neural network may comprise a convolutional neural network which receives the image data and from it generates convolved data. In a further possibility, the neural network may be a recurrent neural network.

The training together of the neural network and the discriminator network may be performed iteratively in multiple simultaneous neural network update steps and discriminator network update steps; or one or more neural network update steps may be performed interleaved with one or more of the discriminator network update steps, e.g. alternately with the one or more discriminator network update steps.

Optionally, many instances of the neural network ("workers") are trained in parallel, and the resultant sets of commands and reward values are pooled, to permit a richer exploration of the space of possible policy models. The environment used in the neural network update steps may be a simulated version of a real-world environment in which the neural network is subsequently to control the agent, and using which the first tuple datasets may have been produced.

The reinforcement learning system may be implemented as one or more computer programs on one or more computers in one or more locations in which the systems, components, and techniques described below are implemented.

Optionally, in any of the above implementations, the observation at any given time step may further include data from a previous time step that may be beneficial in characterizing the environment, e.g., the action performed at the previous time step, the reward received at the previous time step, and so on.

BRIEF DESCRIPTION OF THE DRAWINGS

Examples of the present disclosure will now be described for the sake of example only with reference to the following drawings, in which:

Fig. 1 shows a first reinforcement learning system which can be trained by a method according to the present disclosure.
Fig. 2 shows a known discriminator training system for training a discriminator of the reinforcement learning system of Fig. 1 concurrently with training a neural network of the reinforcement learning system.
Fig. 3 shows a first discriminator training system according to the present disclosure for training a discriminator of the reinforcement learning system of Fig. 1 concurrently with training a neural network of the reinforcement learning system.
Fig. 4 shows a second reinforcement learning system which can be trained by a method according to the present disclosure.
Fig. 5 shows a second discriminator training system according to the present disclosure for training a discriminator of the reinforcement learning system of Fig. 4 concurrently with training a neural network of the reinforcement learning system.
Fig. 6 is a flow diagram of an example process performed the systems of Figs. 1 and 3, or alternatively of Figs. 4 and 5, for training a neural network and discriminator network of the reinforcement learning system.
Fig. 7 shows sub-steps of one of the steps of the flow diagram of Fig. 6.

Like reference numbers and designations in the various drawings indicate like elements.

DETAILED DESCRIPTION

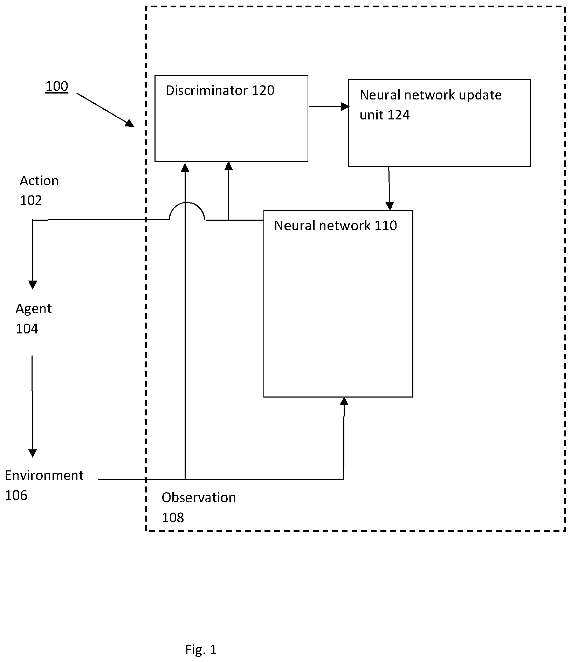

FIG. 1 shows an example control system 100 referred to as a reinforcement learning system. The control system 100 is an example of a system implemented as computer programs on one or more computers in one or more locations in which the systems, components, and techniques described below are implemented.

The reinforcement learning 100 selects actions 102 to be performed by an agent 104 interacting with an environment 106 at each of multiple steps. The action 102 is in the form of "action data", which is control data input to the agent 104, operative to control the agent 104 to perform the action.

Specifically, in each time step, the following three actions occur. First, a new observation 108 of the state of the environment 106 is obtained. The observation 108 is transmitted to the reinforcement learning system 100. Based on the observation, the reinforcement learning system 100 selects a new action 102 for the agent 104 to perform. Finally, the agent 104 performs the action.

The reinforcement learning system 100 includes a neural network 110 employed in generating, in each time step, the action 102 based on the observation 108. The neural network 110 is associated with one or more (typically a large number) of numerical parameters, denoted by the vector $\theta$. For example, if the neural network 110 includes a plurality of layers, each having one or more neurons ("nodes"), each of the parameters may be a weight value used in a connection between a respective pair of neurons in two consecutive layers. The numerical parameters collectively define the function the neural network 110 performs. The process of "training" the neural network 110 is an iterative procedure for updating these parameters.

In some implementations, the neural network 110 may generate an output which indicates a specific action 102. In other implementations, the neural network 110 generates an output which defines a probability distribution over a set of possible actions, and the action 102 is generated by sampling the probability distribution. The neural network may be referred to in this case as a policy network.

During a training phase, the neural network 110 is trained by a discriminator network 120 (also referred to simply as a discriminator) and a neural network update unit 124. The discriminator 120 of the reinforcement learning system 100 receives the observation 108 and the action 102, and from them generates a reward value. Based on the reward values, the neural network update unit 124 of the reinforcement learning system 100 updates each of the numerical parameters $\theta$ associated with the neural network 110, and which collectively determine the function performed by the neural network 110. There may be a "working phase", following the training phase, in which the discriminator 120 and neural network update unit 124 are disabled, the neural network 110 is not updated any further.

As described below, the discriminator 120 is trained using a first database (not shown in Fig. 1) containing first tuple datasets ("first tuples"). Each first tuple records state data describing the environment 106 at a respective time in the past, when an agent (e.g. the agent 104 but optionally a different agent) was controlled by an "expert", such as another robot or a human expert, to perform a task. The first tuple also includes the control data the expert generated to control the agent at the corresponding time.

The reward value generated by the discriminator 120, upon receiving the observation 108 and the action 102 generated by the neural network 110, indicates how well the action 102 generated by the neural network 110 mimics the first tuples (i.e. how well the action 102 instructed by the neural 110 mimics the action an expert might be expected, based on the first database, to command the agent 104 to perform when the environment has the state indicated by the observation 108). For example, the discriminator 120 may be arranged to output a value in the range 0 to 1. The value may be higher when the inputs to the discriminator 120 mimic the first tuples.

As the neural network 110 controls the agent 104, a plurality of second tuple datasets ("second tuples") are accumulated. Each second tuple consists of the observation 108, and the corresponding action 102 generated by the neural network 110 upon receiving the observation 108. That is, the second tuple is the pair of inputs to the discriminator 120.

The neural network update unit 124 employs reward values generated by the discriminator 120 for each of these second tuples. The neural network update unit 124 adjusts the parameters of the neural network 110 based on the corresponding reward values. The neural network update unit 124 may be of a design known in the literature.

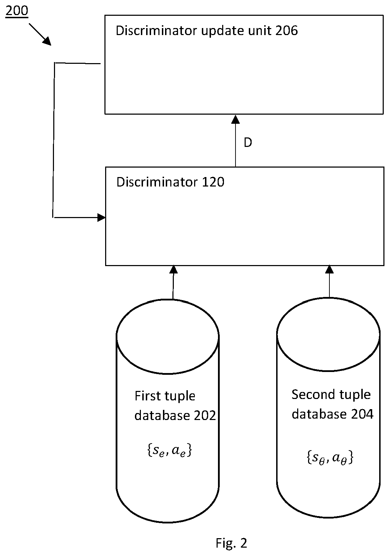

Turning now to Fig. 2, a discriminator training system 200 for training the discriminator 120 is shown. The discriminator training system 200, in combination with the reinforcement learning system of Fig. 1, is capable of implementing the known algorithm Generative Adversarial Imitation Learning (GAIL) proposed by J. Ho and S. Ermon ("Generative Adversarial Imitation Learning", in Advances in Neural Information Processing Systems, pages 4565-4573, 2016).

The discriminator training system 200 includes, in addition to the discriminator 120, a database 202 of the first tuples. The first tuples are denoted $\{s_e, a_e\}$. As noted, each first tuple records a state 108 of the environment 106 in the past, and a corresponding action an expert selected for the agent 104 to perform when the environment was in that state. Typically, the first tuples are each part of a corresponding one of a plurality of sequences of first tuples (referred to here as an "expert sequence"); that is, the first tuples in the database 202 are partitioned into a plurality of the expert sequences. Each expert sequence describes a respective period of time (i.e. plurality of consecutive time steps) in which an expert controls the agent to perform the task. The first tuples of the expert sequence are labelled by a time index. The time index is zero for the first first tuple of the expert sequence. This first first tuple is state data for the initial state of the environment, plus the corresponding action the expert instructed (if any; for certain time steps the expert may instruct no action, so the action data is a null data set). Each other first tuple in the expert sequence has a time index which is one higher than the preceding first tuple in the expert sequence.

The discriminator training system 200 further includes a database 204 of the accumulated second tuples. The second tuples are denoted $\{s_\theta, a_\theta\}$. Typically, the second tuples are each part of a corresponding one of a plurality of sequences of second tuples (referred to here as an "action sequence"); that is, the second tuples in the database 204 are partitioned into a plurality of action sequences. Each action sequence describes a respective period of time (i.e. plurality of consecutive time steps) in which the neural network 110 controlled the agent 104 to perform the task. The second tuples of the action sequence are labelled by a time index. The time index is zero for the first second tuple of the action sequence. This first second tuple is state data for the initial state of the environment, plus the corresponding action the expert instructed (if any; the neural network may be configured for certain time steps to instruct no action, so the action data is a null data set). Each other second tuple in the action sequence has a time index which is one higher than the preceding second tuple in the action sequence.

The discriminator 120 is configured to receive a sequence of tuples, with each tuple in the sequence being a first tuple from the first tuple database 202 or a second tuple from the second tuple database 204. The sequence includes both first and second tuples, in any order. The first and second tuples may be selected at random.

The discriminator training system 200 further includes a discriminator update unit 206 which receives the output generated by the discriminator 120 upon one of the tuples of the sequence being input to the discriminator 120. The discriminator 120 is associated with one or more (typically a large number) of numerical parameters, denoted by the vector $\psi$. The output of the discriminator is denoted by $D_\psi(s, a)$, or more simply by $D(s, a)$. For example, if the discriminator 120 includes a plurality of layers, each having one or more neurons ("nodes"), each of the parameters may be a weight value used in a connection between a respective pair of neurons in two consecutive layers. The discriminator update unit 206 generates incremental updates to each of the parameters $\psi$. The updates are chosen so as to maximise an objective function, optionally subject to a constraint. As described below, the objective function may include expectation values over the distribution of the first tuples and second tuples, which may be estimated based on the respective outputs $D$ generated by the discriminator 120 upon the sequence of first and second tuples being input to the discriminator 120. Typically, the discriminator adjustment unit 206 is configured to obtain gradients of the objective function with respect to the parameters $\psi$, and so obtain respective updates to each of the parameters $\psi$.

The process of training the neural network 110 within the system 100, and the discriminator 120 within the system 200, are performed concurrently. For example, there may be an iterative process, in which neural network update steps in which an update is made to the neural network 100 (using current values for the parameters of the discriminator 120), are interleaved by discriminator update steps in which an update is made to the discriminator 120 using the first tuple database 202 and the second tuple database 204. For example, the update steps to the neural network 100 may alternate with the update steps to the discriminator 120. The neural network update steps may include generating at last part of an action sequence, a complete action sequence or multiple action sequences, and generating second tuples which are added to the second tuple database 204.

The behavior of the entire system shown in Fig. 1 may be denoted as a Markov Decision Process (MDP) is a tuple $(S, A, R, P, \gamma)$ with states $S$, actions $A$, a reward function $R(s, a)$, transition distribution $P(s'|s, a)$, and discount $\gamma$. When the environment 106 is in state $s \in S$, the agent 104 takes action $a \in A$ specified by the neural network 110. The distribution of the actions output by the neural network 110 for an observation 108 which indicates that the environment is in state s is referred to as the policy defined by the neural network 100. Denoting the current state of the parameters of the neural network by the vector $\theta$, the policy can be denoted $\pi_\theta$. The environment 106 moves to state $s' \in S$ according to the transition distribution $P(s'|s, a)$. The goal of the discriminator 120 and the neural network update unit 124 is to find a set of the parameters $\theta$ for which policy $\pi_\theta$ maximizes the expected sum of discounted rewards, represented by the action value function $Q^{\pi_\theta}(s_0, a_0) = \mathbb{E}^{\pi_\theta}\left[\sum_{t=0}^{\infty} \gamma^t R(s_t, a_t)\right]$, where $\mathbb{E}^{\pi_\theta}$ is an expectation over trajectories starting from $s_0 = s$ and taking action $a_0 = a$ and thereafter running the policy $\pi_\theta$.

In GAIL, the neural network update unit 124 and discriminator update unit 206, are configured to together solve an objective function defined as follows:

$$\underset{\theta}{min}\ \underset{\psi}{max}\ \mathbb{E}_{(s,a)\sim\pi_E}[\log D_\psi(s, a)] + \mathbb{E}_{(s,a)\sim\pi_\theta}[\log\left(1 - D_\psi(s, a)\right)] - \lambda_H H(\pi_\theta) \quad (1)$$

where $\pi_\theta$ is the agent policy, $\pi_E$ is an expert policy which is assumed to be the same as the distribution of the first tuples in the first tuple database 202. Numerically, the average $\mathbb{E}_{(s)\sim\pi_E}$ is evaluated as an average over some or all of the first tuples in first tuple database 202 (e.g. over a batch of the first tuples), and the average $\mathbb{E}_{(s)\sim\pi_\theta}$ is evaluated as an average over some or all of the second tuples in database 204 (e.g. over a batch of the second tuples). $H(\pi_\theta)$ is an (optional)

entropy regularizer, and $\lambda_H$ is a hyperparameter used to control the amount of regularization.

The sum of the two expectation values in Eqn. (1) is a term which encourages the discriminator to maximise respective imitation values $D(s, a)$ which the discriminator 120 generates upon receiving any of the plurality of the first tuple datasets $(s, a)$, and to minimize respective imitation values $D(s, a)$ which the discriminator 120 generates upon receiving any of the plurality of the second tuple datasets $(s, a)$. Eqn. (1) encourages the neural network update unit 124 to maximize the expectation value, over the states and actions encountered when the agent 104 is controlled using the neural network 110, of a reward function defined based on the output of the discriminator 120 as $R(s, a) = \log(1 - D(s, a))$.

GAIL is theoretically appealing and practically simple. The discriminator, however, can focus on any features to discriminate, whether these features are task-relevant or not. For example, if the task is picking up a certain object with an agent 104 comprising a mechanical arm, if the observations for the expert sequences happen to contain images of other objects in a certain arrangement, and if the observations for the action sequences happen to contain images of the other objects in another arrangement, then the discriminator may learn to distinguish the first tuples from the second tuples based on the arrangement of the other objects, which is of little or no relevance to the task.

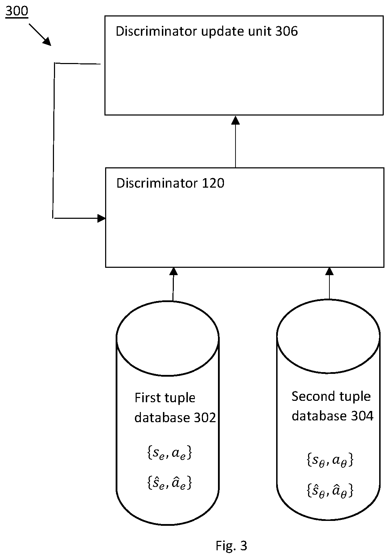

Turning now to Fig. 3, a first discriminator training system 300 according to the present disclosure for training the discriminator 120 is shown. The discriminator training system 200 is an example of a system implemented as computer programs on one or more computers in one or more locations in which the systems, components, and techniques described below are implemented. The discriminator training system 300 has the same structure as that of Fig. 2, but with a different discriminator update unit 306, and with different databases 302, 304. Like the discriminator training system 200 of Fig. 2, the discriminator training system 300 is used concurrently with the reinforcement learning system 100 of Fig. 1 in a process of training the neural network 100 and the discriminator 120.

The discriminator update unit 306 is arranged to iteratively vary the numerical parameters, $\psi$ to increase an objective function, but a different object function from that given by Eqn. (1). The objective function used by the discriminator update unit 306 is one which produces a discriminator which is able to distinguish first and second tuples based on aspects of those tuples which are of greater significance to performing the task. Specifically, the discriminator update unit 306 trains the discriminator 120 with a constraint that the discriminator 120 is unable to reliably determine whether certain first tuples are indeed first tuples, and whether certain second tuples are indeed second tuples. These first tuples and second tuples are referred to below as the "invariant set". The first tuples in the invariant set are called "invariant first tuples" and the second tuples in the invariant set are called "invariant second tuples". Specifically, the database 302 includes data which designates a subset of the first tuples $\{s_e, a_e\}$ as a set of invariant first tuples, denoted $\{\hat{s}_e, \hat{a}_e\}$. Similarly, the database 404 includes data which designates a subset of the second tuples $\{s_\theta, a_\theta\}$ as a set of invariant second tuples, denoted $\{\hat{s}_\theta, \hat{a}_\theta\}$.

Suppose for example that one of the invariant first tuples $\{\hat{s}_e, \hat{a}_e\}$ is from a certain expert sequence, and one of the invariant second tuples $(\hat{s}_\theta, \hat{a}_\theta)$ is from a certain action sequence. The invariant first tuple has many features in common with the rest of the expert sequence, e.g. data describing objects in the environment which are not involved in the task, and data describing the appearance of the agent 104 (this is in case in which the state data 108 is images of the environment, including of the agent). These features are of little relevance to performing the task. Similarly, the invariant second tuple has many features in common with the rest of the action sequence, and these features too have little relevance to the task. The discriminator 120 is thus constrained to learn such that it does not use any of these features to distinguish between first and second tuples. The discriminator is in effect trained to ignore the irrelevant features, and instead concentrate on features of the environment which change during the action sequence and expert sequence. This is typically features of the environment which are relevant to the task.

Furthermore, the certain first tuples and certain second tuples may be chosen to be tuples which are "uninformative tuples", i.e. ones containing little information about how to perform the task. The tuples at the beginning of expert sequences (specifically, having a time index before a first time threshold) often include observations and either null action data, or else action data which is weakly correlated with actions which are needed to perform the task, and so may be chosen as the uninformative tuples. Similarly, uninformative second tuples can be generated artificially, e.g. by taking one or more second tuples from an action sequence (e.g. at the start of the action sequence) and randomizing the action data or setting it to the null vector. The constraint that the discriminator is unable to determine whether the uninformative tuples are first tuples or second tuples, implies that the discriminator does not learn to distinguish first tuples from second tuples based on features of the observations which have no relevance to solving the task.

One way of implementing this would be to use Eqn. (1) as the objective function, but to optimize it with respect to the parameters $\psi$ subject to the constraint that the discriminator 120 misclassifies a certain proportion of the invariant set. For example, the constraint may be that the proportion of the invariant first tuples which the discriminator 120 correctly classifies (e.g. the proportion of the invariant first tuples for which the discriminator 120, upon receiving the invariant first tuple, outputs a value greater than or equal to one half) plus the proportion of the invariant second tuples which the discriminator 120 correctly classifies (e.g. the proportion of the invariant second tuples for which the discriminator 120, upon receiving the invariant second tuple, outputs a value less than one half) is less than or equal to one half.

In the explanation of Figs. 1-3, it is assumed that the first and second tuples contain both the state data (observation) and the corresponding action generated from the state data. However, an optional feature of a method according to the present disclosure is that the discriminator may operate based only on state data (observations). That is, each of the first tuples in each of the expert sequences may be only the state data from the corresponding time step of the expert trajectory (i.e. not additionally the corresponding action data supplied to the agent by an expert in that time step), and each of the second tuples may be only the state data from the corresponding time step of an action sequence (i.e. not additionally the action data generated by the neural network in that time step).

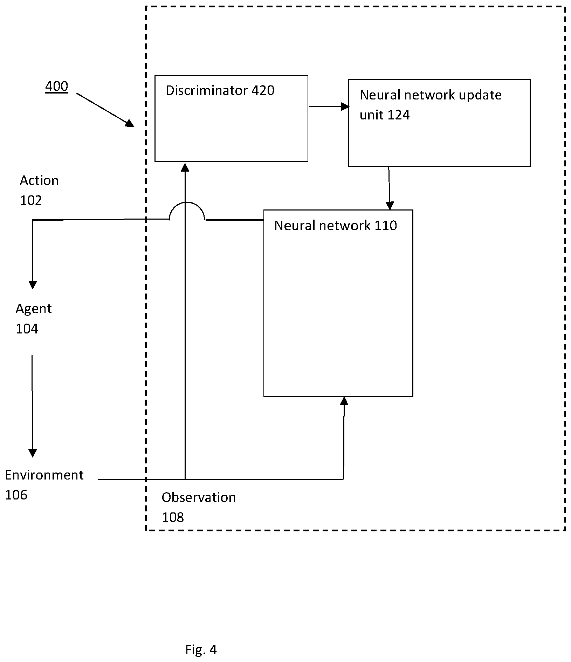

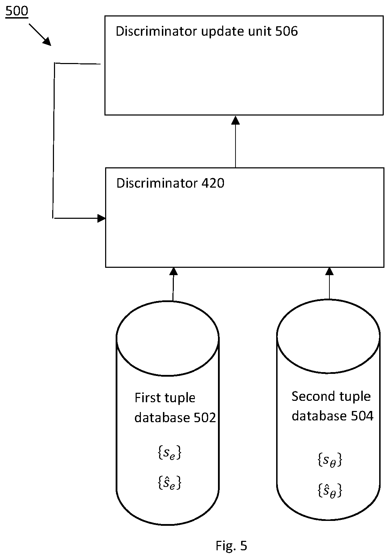

In this case, the reinforcement learning system would have the alternate form 400 shown in Fig. 4, in which elements corresponding to those of Fig. 1 are given the same reference numerals 100. In contrast to Fig. 1, in Fig. 4 the discriminator 420 does not receive the output of the neural network 110. This form of the discriminator 420 is assumed in the following discussion. The output of the discriminator 420 is denoted by $D_\psi(s)$, or more simply by $D(s)$. As described below, the discriminator 420 is trained by the discriminator training system 500 illustrated in Fig. 5. The reinforcement learning system 400 and the discriminator training system 500 are examples of a system implemented as computer programs on one or more computers in one or more locations in which the systems, components, and techniques described below are implemented.

Note that in the case that the first and second tuples omit action data, the first one or more first tuples in each expert sequence (specifically, those having a time index before a first time threshold), and the first or more second tuples in each action sequence (specifically, those having a time index before a second time threshold, which may be the same as the first time threshold), are indeed uninformative about how to perform the task, since they both substantially consist only of state data characterizing the initial state of the environment (and in some cases also the initial state of the agent), rather than the task to be performed starting at that initial state.

In the case of Fig. 4 too, the neural network update unit 124 is trained to adapt the neural network incrementally to maximize a reward value, but in this case the reward value is $R(s) = \log(1 - D(s))$, i.e. based on the output of the discriminator 420.

The discriminator 420 is trained in the discriminator training system 500 illustrated in Fig. 5. In contrast, to the discriminator training system 300, the first tuples in the database 502, denoted by $\{s_e\}$ and which are grouped into expert trajectories, include only state data from the expert trajectories. The invariant first tuples are a subset of the first tuples $\{s_e\}$ denoted by $\{\hat{s}_e\}$. Similarly, the second tuples in the database 504, denoted by $\{\hat{s}_\theta\}$ and which are grouped into action trajectories, include only state data from the action trajectories. The invariant second tuples are a subset of the second tuples $\{\hat{s}_\theta\}$ denoted $\{\hat{s}_\theta\}$.

The discriminator update unit 506 is arranged to train the discriminator 420 to be the solution of the following constrained optimization problem:

$$\underset{\psi}{max}\ \mathbb{E}_{s \sim \pi_E}[\log D_\psi(s)] + \mathbb{E}_{s \sim \pi_\theta}\left[\log\left(1 - D_\psi(s)\right)\right] \qquad (2)$$

subject to

$$\frac{1}{2}\ \mathbb{E}_{s \sim \pi_E}\left[\mathbf{1}_{D_\psi(s) \geq \frac{1}{2}}|s \in \mathcal{J}\right] + \frac{1}{2}\ \mathbb{E}_{s \sim \pi_E}\left[\mathbf{1}_{D_\psi(s) \geq \frac{1}{2}}|s \in \mathcal{J}\right] \geq \frac{1}{2} \quad (3)$$

here $\mathcal{J}$ refers to the invariant set. $\mathbf{1}_{x \geq \frac{1}{2}}$ denotes a function of a parameter x which has value 1 if the parameter x is greater than or equal to ½, and zero otherwise. Note that the objective function of Eqn. (2) is the same as the objective function Eqn. (1) used in GAIL (except that it does not include the optional regularization term of Eqn. (1), but in fact an equivalent regularization term may optionally be added to (2)). However, Eqn. (2), unlike Eqn. (1), is a function of state data only (e.g. still or moving images captured at a corresponding time step from one or more cameras). This means that formulating the first tuples in the first tuple database 502 does not require observing expert actions. This is a very convenient feature, since it enables learning in very off-policy settings, where the control variables used by the expert (another robot or a human) to control an agent during the expert sequences (and/or the distributions of those control variables), are different from the ones used to control the agent 104 during the action sequences.

The constraint of Eqn. (3) states that the discriminator 420 should be unable, with a greater chance of success than 50%, to distinguish whether the invariant tuples in $\mathcal{J}$ are tuples from an expert sequence or an action sequence. In variations of the method, the chance of success may be fixed at a different threshold.

To maximize the objective function of Eqns. (2) and (3) in practice, a method according to the present disclosure can employ, at each step of updating the discriminator 420: (i) a batch of N randomly selected examples of first tuples (which we will denote by $s_e^{(i)} \sim \pi_E$, for i=1, ...,N); (ii) a batch of N randomly selected examples of second tuples (which we will denote by $s_\theta^{(i)} \sim \pi_\theta$ ); (iii) a batch of *N* randomly selected examples of first invariant tuples (which we will denote by $\hat{s}_e^{(i)} \sim \pi_E$ , for *i=1, ...,N);* and (iv) a batch of *N* randomly selected examples of second invariant tuples (which we will denote by $\hat{s}_\theta^{(i)} \sim \pi_\theta$ ). In a variation, the respective number of examples of these four types of tuples may be different.

The discriminator update unit 506 can act to incrementally update the parameters $\psi$ of the discriminator 420 to maximise the objective function:

$$\mathcal{L}_\psi \left( \left\{ s_e^{(i)} \right\}, \left\{ s_\theta^{(i)} \right\}, \left\{ \hat{s}_e^{(i)} \right\}, \left\{ \hat{s}_\theta^{(i)} \right\} \right) = \sum_{i=1}^N \log D_\psi \left( s_e^{(i)} \right) + \log \left( 1 - D_\psi \left( s_\theta^{(i)} \right) \right) \tag{4}$$

$$-\lambda \sum_{i=1}^N \log D_\psi \left( \hat{s}_e^{(i)} \right) + \log \left( 1 - D_\psi \left( \hat{s}_\theta^{(i)} \right) \right) \mathbf{1}_{accuracy(\hat{s}_e, \hat{s}_\theta) < \frac{1}{2}},$$

where *accuracy*($\hat{s}_e$, $\hat{s}_\theta$) is defined as the average of the discriminator accuracies:

$$accuracy(\hat{s}_e, \hat{s}_\theta) = \frac{1}{2N} \sum_{i=1}^N \left[ \mathbf{1}_{D_\psi\left(\hat{s}_e^{(i)}\right) \geq \frac{1}{2}} + \mathbf{1}_{D_\psi\left(\hat{s}_\theta^{(i)}\right) < \frac{1}{2}} \right]. \tag{5}$$

The scalar $\lambda > 0$ is a tunable hyperparameter. In Eqn. (4) it is multiplied by a term, - $\sum_{i=1}^N \log D_\psi \left( \hat{s}_e^{(i)} \right) + \log \left( 1 - D_\psi \left( \hat{s}_\theta^{(i)} \right) \right)$ , which is the negative of the objective function of Eqn. (2), but applied only to the invariant set $\mathcal{J}$.

The selection of the invariant set $\mathcal{J}$ can be done in various ways.

As mentioned above, a way to construct the invariant set $\mathcal{J}$ is to use early frames from both expert and agent episodes. Since in early frames little or no task behavior is apparent, this strategy turns out to be effective and no extra data has to be collected. This strategy also improves robustness with respect to variation in the initial conditions of the task; see for example block insertion in Figure 1(d).

Another way to collect the invariant second tuples is to execute a random policy. We can then use the resulting random episodes, for both expert and agent, to construct the invariant set $\mathcal{J}$.

Other algorithms may be used to choose the invariant set, including non-stationary and adversarial ways. Irrespective of which method is used, if the set $\mathcal{J}$ captures some forms of irrelevance but not all forms, it will nonetheless help in improving performance compared to not using an invariant set at all. Experimentally, it has been found that a method according to the present disclosure performs better than a reinforcement learning system based on GAIL predecessor whenever the invariant set is selected based on any prior information the designer of the system has about what aspects of the state data and/or action data might be task irrelevant.

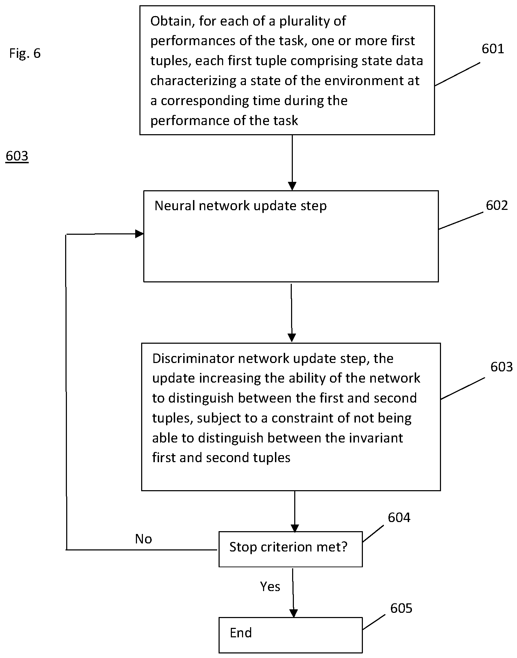

Turning to Fig. 6, a method 600 which is an example of the present disclosure is summarized. The method 600 is performed repeatedly and iteratively, such as by the reinforcement learning system 100 of Fig. 1 in combination with the discriminator training system 300 of Fig. 3, or by the reinforcement learning system 400 of Fig. 4 in combination with the discriminator training system 500 of Fig. 5.

In a first step 601, data is obtained describing one or more expert trajectories. This data, in the form of first tuples, is placed in the databases 302, 502. A subset of the first tuples are designed as invariant first tuples.

Steps 602, 603 of method 600 are steps of respectively updating the parameters $\theta$ of the neural network 110, and the parameters $\psi$ of the discriminator 120, 420. The steps may be performed in alternation, until in step 604 is determined that a termination criterion is met. Following this, the method terminates in step 605.

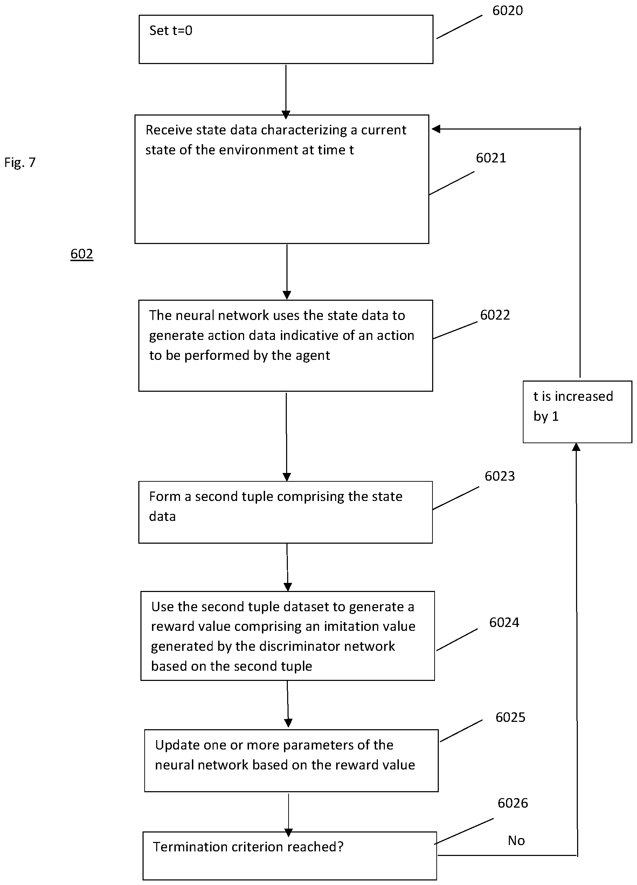

The neural network update step 602 can be implemented in various ways. One of these is illustrated in Fig. 7. In this case, it includes a complete performance of an action sequence with concurrent updating of the neural network 110. The action sequence starts from a time step labelled by a time index *t* which is set to the value *t=0* in sub-step 6020.

In sub-step 6021 of step 602, the reinforcement learning system 100, 400 receives state data describing a state of the environment at a present time step t.

In sub-step 6022, the neural network 110 uses the state data for time t to generate action data indicative of an action to be performed by the agent. This is based on current values of the parameters $\theta$ of the neural network 110.

In sub-step 6023, a second tuple is generated and added to the database 304, 504. In the case that the reinforcement learning system is the system 100, the second tuple includes the action data generated in sub-step 6022. In the case that the reinforcement learning system is the system 400, the second tuple does not include the action data generated in sub-step 6022.

In sub-step 6024, the discriminator 120, 420 is used to obtain a reward value.

In sub-step 6025, based on the reward value the neural network update unit 123 updates the parameters $\theta$ of neural network 110.

In sub-step 6026 it is determined whether a termination criterion has been reached. If so, step 602 ends. Otherwise, the time index t is increased by one, and the method returns to sub-step 6021, and commences the next time step of the action sequence. The termination criterion may for example be that the time index $t$ has reached a third time threshold. This third time threshold may be chosen to be less than the number of first tuples in some or all of the expert trajectories. This has the advantage that few if any of the action sequences include second tuples which illustrate completing the task. This encourages the discriminator to distinguish the first tuples at the end of the expert sequences from second tuples based on the behaviour of the expert at the end of the expert sequences, which in turn helps the discriminator to recognize the goal condition.

Alternatively, the output of the discriminator network 120, 420 may be employed in sub-step 6026 in determining whether the termination criterion is met. For example, the termination criterion may be that the discriminator output (score) for the current value of time index $t$, and optionally for one or more immediately preceding values of the time index, has a certain relationship to the discriminator output for one or more preceding values of the time index $t$. For example, the termination criterion may be that the current time step is the last in a series of $T_{patience}$ consecutive time steps for which the discriminator output (score) exceeds the median score of the second tuples of the action sequence so far. For example, $T_{patience}$ may be equal to 10. This means that the value of the third time threshold is in effect different from one action sequence to another.

Many variations of the implementation of step 602 are possible, each including the steps 6021 to 6025. In one variation, the sub-step 6026 is performed before sub-step 6025, so that the action sequence is completed before the parameters $\theta$ of neural network 110 are updated.

In a further variation, step 602 may include the performance of multiple action sequences before sub-step 6025 is performed. In this case, the neural network update unit 124 has data describing multiple action sequences performed for the current parameters of neural network 110 when it updates those parameters.

In further variations, each performance of step 602 may include only part of an action sequence. That is, the complete action sequence may only be performed during multiple successive steps 602, which are interleaved with steps 603 such that the discriminator is updated within the performance of the action sequence.

In step 603, the parameters $\psi$ of the discriminator network 120 (or alternatively 420) are updated based on first tuples in the database 302 (or alternatively 502), and the second tuples in the database 304 (or alternatively 504). During this update, a subset of the first tuples are designated as invariant first tuples, and a subset of the second tuples are designated as invariant first tuples. The update is performed to increase an objective function, with the constraint that the discriminator does not become able to reliably (e.g. with a probability of more than a certain threshold, such as 50%) indicate that the invariant first tuples are based on time steps of an expert sequence, and/or to reliably (e.g. with a probability of more than a certain threshold, such as 50%) indicate that the invariant second tuples are based on time steps of an action sequence. In the case that the reinforcement learning system is the system 400, the objective function may be Eqn. (2), and the constraint may be that of Eqn. (3). Numerically, the update may be performed by increasing the objective function of Eqn. (4).

Alternatively, in the case that the reinforcement learning system is the system 100, the objective function by be Eqn. (1) omitting the minimization with respect to $\theta$, the constraint may be an analogue of Eqn. (3) which includes also the action data as inputs to the discriminator 120, and numerically the update may be performed by increasing the objective function which is an analogue of Eqns. (4).

Optionally, method 600 may include further steps (not shown) of modifying the tuples in the databases 302 and/or 304, or in the databases 502 and/or 505. For example, the state data may be modified. For example, additional tuples or replacement tuples for any of the databases may be generated by modifying tuples already in the database (data augmentation).

We now turn to a discussion of the environments 106 and agents 104 to which the disclosed methods can be applied.

In some implementations, as noted above, the environment 106 is a real-world environment. The agent 104 may be an electromechanical agent interacting with the real-world environment. The agent may move in the environment, e.g. translationally (i.e. changing its location in the environment) and/or altering its configuration. For example, the agent may be a robot or other static or moving machine interacting with the environment to accomplish a specific task, e.g., to locate an object of interest in the environment or to move an object of interest to a specified location in the environment (for example, the agent may comprise a moveable arm controllable by the trained neural network 110 to pick up and move objects in the environment), and/or to navigate to a specified destination in the environment; or the agent may be an autonomous or semi-autonomous land or air or sea vehicle navigating through the environment.

In these implementations, the observations may include, for example, one or more of images, object position data, and sensor data to capture observations as the agent interacts with the environment, for example sensor data from an image, distance, or position sensor or from an actuator. In the case of a robot or other mechanical agent or vehicle the observations may similarly characterize one or more of the position, linear or angular velocity, force, torque or acceleration, and global or relative pose of one or more parts of the agent. The observations may be defined in 1, 2 or 3 dimensions, and may be absolute and/or relative observations. For example in the case of a robot the observations may include data characterizing the current state of the robot, e.g., one or more of: joint position, joint velocity, joint force, torque or acceleration, and global or relative pose of a part of the robot such as an arm and/or of an item held by the robot. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these implementations, the actions may be control inputs to control the robot, e.g., torques for the joints of the robot or higher-level control commands; or to control the autonomous or semi-autonomous land or air or sea vehicle, e.g., torques to the control surface or other control elements of the vehicle or higher-level control commands; or, e.g., motor control data. In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation, e.g., steering, and movement, e.g., braking and/or acceleration of the vehicle.

In some implementations the environment 106 is a simulated environment and the agent is implemented as one or more computers interacting with the simulated environment.

For example the simulated environment 106 may be a simulation of a robot or vehicle and the reinforcement learning system may be trained on the simulation. For example, the simulated environment may be a motion simulation environment, e.g., a driving simulation or a flight simulation, and the agent is a simulated vehicle navigating through the motion simulation. In these implementations, the actions may be control inputs to control the simulated user or simulated vehicle. A simulated environment can be useful for training a reinforcement learning system before using the system in the real world. In another example, the simulated environment may be a video game and the agent may be a simulated user playing the video game. Generally in the case of a simulated environment the observations may include simulated versions of one or more of the previously described observations or types of observations and the actions may include simulated versions of one or more of the previously described actions or types of actions.

In a further example the environment 106 may be a protein folding environment such that each state is a respective state of a protein chain and the agent is a computer system for determining how to fold the protein chain. In this example, the actions are possible folding actions for folding the protein chain and the result to be achieved may include, e.g., folding the protein so that the protein is stable and so that it achieves a particular biological function. As another example, the agent may be a mechanical agent that performs or controls the protein folding actions selected by the system automatically without human interaction. The observations may include direct or indirect observations of a state of the protein and/or may be derived from simulation.

In a similar way the environment 106 may be a drug design environment such that each state is a respective state of a potential pharma chemical drug and the agent is a computer system for determining elements of the pharma chemical drug and/or a synthetic pathway for the pharma chemical drug. The drug/synthesis may be designed based on a reward derived from a target for the drug, for example in simulation. As another example, the agent may be a mechanical agent that performs or controls synthesis of the drug.

In the case of an electronic agent the observations may include data from one or more sensors monitoring part of a plant or service facility such as current, voltage, power, temperature and other sensors and/or electronic signals representing the functioning of electronic and/or mechanical items of equipment. In some applications the agent may control actions in a real-world environment including items of equipment, for example in a facility such as: a data center, server farm, or grid mains power or water distribution system, or in a manufacturing plant or service facility. The observations may then relate to operation of the plant or facility. For example additionally or alternatively to those described previously they may include observations of power or water usage by equipment, or observations of power generation or distribution control, or observations of usage of a resource or of waste production. The agent may control actions in the environment to increase efficiency, for example by reducing resource usage, and/or reduce the environmental impact of operations in the environment, for example by reducing waste. For example the agent may control electrical or other power consumption, or water use, in the facility and/or a temperature of the facility and/or items within the facility. The actions may include actions controlling or imposing operating conditions on items of equipment of the plant/facility, and/or actions that result in changes to settings in the operation of the plant/facility, e.g., to adjust or turn on/off components of the plant/facility.

In some further applications, the environment 106 is a real-world environment and the agent manages distribution of tasks across computing resources, e.g., on a mobile device and/or in a data center. In these implementations, the actions may include assigning tasks to particular computing resources. As further example, the actions may include presenting advertisements, the observations may include advertisement impressions or a click-through count or rate, and the reward may characterize previous selections of items or content taken by one or more users.

In this disclosure, for a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of the claimed invention, but rather as descriptions of features that may be specific to particular embodiments of particular inventions.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. The processes depicted in the accompanying figures do not necessarily require the particular order shown, or sequential order, to achieve desirable results. In certain implementations, multitasking and parallel processing may be advantageous.

**Claims**

1. A computer-implemented method of training a neural network (110) to generate action data (102) for controlling an agent (104) to perform a task in an environment (106), wherein the environment (106) is a real-world environment, the agent (104) is an electromechanical agent, and the task comprises the electromechanical agent interacting with the environment, the method comprising:

   obtaining, for each of a plurality of expert performances of the task, one or more first tuple datasets, each first tuple dataset comprising state data characterizing a state of the environment (106) at a corresponding time during the corresponding expert performance of the task; and
   performing a concurrent process of training the neural network (110) and a discriminator network (120), the process comprising:

      (i) a plurality of neural network (110) update steps, each of which comprises:

         receiving state data characterizing a current state of the environment (106);

using the neural network (110) and the state data characterizing the current state of the environment (106) to generate action data indicative of an action to be performed by the agent (104);

forming a second tuple dataset comprising the state data;

using the second tuple dataset to generate a reward value, wherein the reward value comprises an imitation value generated by the discriminator network (120) based on the second tuple dataset; and

updating one or more parameters of the neural network (110) based on the reward value;

(ii) a plurality of discriminator network update steps, each which of comprises:

updating the discriminator network (120) based on a plurality of the first tuple datasets and a plurality of the second tuple datasets, the update being to increase respective imitation values which the discriminator network (120) generates upon receiving any of the plurality of the first tuple datasets compared to respective imitation values which the discriminator network (120) generates upon receiving any of the plurality of the second tuple datasets;

wherein the state data for each tuple dataset comprises one or more of object position data, sensor data, and image data defining at least one image of the environment (106),

**characterised in that**

the updating process of the discriminator network (120) is performed subject to a constraint that the updated discriminator network (120), upon receiving any of at least a certain proportion of a first subset of the first tuple datasets and/or any of at least a certain proportion of a second subset of the second tuple datasets, generates imitation values which incorrectly label those tuple datasets, the first subset of first tuple datasets and the second subset of second tuple datasets being invariant tuple datasets which are less informative about how to perform the task than other of the first and second tuple datasets respectively.

2. A computer-implemented method of training a neural network (110) to generate action data (102) for controlling an agent (104) to perform a task in an environment (106), wherein the agent (104) is an electronic agent, and the task comprises the electronic agent controlling operating conditions of items of equipment in a plant or service facility, the method comprising:

obtaining, for each of a plurality of expert performances of the task, one or more first tuple datasets, each first tuple dataset comprising state data characterizing a state of the environment (106) at a corresponding time during the corresponding expert performance of the task; and

performing a concurrent process of training the neural network (110) and a discriminator network (120), the process comprising:

(i) a plurality of neural network (110) update steps, each of which comprises:

receiving state data characterizing a current state of the environment (106);

using the neural network (110) and the state data characterizing the current state of the environment (106) to generate action data indicative of an action to be performed by the agent (104);

forming a second tuple dataset comprising the state data;

using the second tuple dataset to generate a reward value, wherein the reward value comprises an imitation value generated by the discriminator network (120) based on the second tuple dataset; and

updating one or more parameters of the neural network (110) based on the reward value;

(ii) a plurality of discriminator network update steps, each which of comprises:

updating the discriminator network (120) based on a plurality of the first tuple datasets and a plurality of the second tuple datasets, the update being to increase respective imitation values which the discriminator network (120) generates upon receiving any of the plurality of the first tuple datasets compared to respective imitation values which the discriminator network (120) generates upon receiving any of the plurality of the second tuple datasets;

wherein the updating process of the discriminator network (120) is performed subject to a constraint that the updated discriminator network (120), upon receiving any of at least a certain proportion of a first subset of the first tuple datasets and/or any of at least a certain proportion of a second subset of the second tuple datasets, generates imitation values which incorrectly label those tuple datasets, the first subset of first tuple datasets and the second subset of second tuple datasets being invariant tuple datasets which are less informative about how to perform the task than other of the first and second tuple datasets respectively,
and wherein the state data for each tuple dataset comprises data from one or more sensors monitoring part of the plant or service facility.

3. A computer-implemented method according to claim 1 or claim 2 in which the first tuple datasets further include corresponding action data generated based on the state of the environment (106) for controlling the agent (102), and the second tuple datasets further include corresponding action data generated based on the state of the environment (106) for controlling the agent (102).

4. A computer-implemented method according to claim 1 or claim 2 in which the first tuple datasets do not further include action data, and the second tuple datasets do not further include action data generated by the neural network (110).

5. A computer-implemented method according to any preceding claim in which the constraint is that, upon receiving any of at least a specified proportion of tuple datasets included in the first and second subsets, the discriminator network (120) generates (i) an imitation value below an imitation value threshold if the received tuple dataset is a first tuple dataset, and (ii) an imitation value above the imitation value threshold if the received tuple dataset is a second tuple dataset, and optionally in which the update to the discriminator network (120) is performed by modifying parameters of the discriminator network (120) to increase a function which includes a term which varies inversely dependent with an accuracy parameter, the accuracy parameter (i) taking a higher value if, upon receiving one of the first subset of first tuple datasets, the discriminator network (120) generates with a probability above a probability threshold an imitation value above the imitation value threshold, and (ii) taking a higher value if, upon receiving one of the second subset of second tuple datasets, the discriminator network (120) generates with a probability above the probability threshold an imitation value below the imitation value threshold.

6. A computer-implemented method according to any preceding claim,

   (a) in which, for each performance of the task, the corresponding first tuple datasets form an expert sequence of first tuple datasets labelled by a time index which is zero for the first tuple dataset of the expert sequence, and one higher for each successive first tuple dataset than for the preceding one of the expert sequence, and
   (b) the neural network (110) update steps are based on one or more action sequences of second tuples, wherein for each action sequence of second tuples:

      a first second tuple of the action sequence has a time index of zero, and is performed for state data describing the environment (106) in a corresponding initial state, and
      each of other second tuples the action sequence has a time index one greater than the preceding second tuple of the action sequence, and is performed for state data describing the environment (106) upon the performance by the agent (104) of the action data generated in the preceding time step, and optionally in which, in each of the discriminator network (120) update steps,

         the first subset of first tuple datasets are first tuple datasets for which the corresponding time index is below a first time threshold, and
         the second subset of second tuple datasets are tuple datasets for which the corresponding time index is below a second time threshold.

7. A computer-implemented method according to claim 6, in which all the second tuple datasets employed in each discriminator network (120) update step are tuple datasets for which the corresponding time index is below a third time threshold, the expert sequences employed in the discriminator network (120) update including first tuples having a time index above the third time threshold.

8. A computer-implemented method according to claim 6, in which, for each action sequence, a corresponding third time threshold is determined, and the second tuple datasets of the action sequence employed in each discriminator network (120) update step only include second tuple datasets for which the corresponding time index is below a corresponding third time threshold, and optionally comprising a step of, for each action sequence, selecting the third time threshold for the action sequence based on imitation values for at least a plurality of the second tuple datasets of the action sequence, in which, optionally, the third time threshold is set as the smallest time index such that a certain number $T_{patience}$ of the most recent the imitation values is above an imitation quality threshold, in which, optionally, the imitation quality threshold is based on the imitation values of a plurality of second tuples of that action sequence having a time index below the third time threshold.

9. A computer-implemented method according to any preceding claim in which, during at least one of (i) one or more of the neural network (110) update steps, a modified form of the second tuple datasets is generated by making a modification to the state data of the second tuple datasets, and (ii) one or more of the discriminator network (120) update steps, a modified form of the first and/or second tuple datasets is generated by making a modification to the state data of one or more of the first and/or second tuple datasets.

10. A computer-implemented method according to claim 9, in which the modification comprises applying to the image data one or more modifications selected from the set comprising: brightness changes; contrast changes; saturation changes; cropping; rotation; and addition of noise.

11. A computer-implemented method according to claims 9 or 10 when dependent upon claim 14, in which the modification comprises removing the image data for one or more of the images of the state data.

12. A computer-implemented method of performing a task, the method comprising:

training a neural network (110) to generate commands for controlling an agent (104) to perform the task in an environment, by a method according to any preceding claim; and
a plurality of times performing the steps of:

(i) obtaining state data describing a current state of the environment;
(ii) transmitting the state data to the neural network (110), the neural network (110) generating action data (102) based on the state data; and
(iii) transmitting the action data (102) to the agent (104), the agent (104) being operative to perform an action defined by the action data (102) within the environment (106);

whereby the neural network (110) successively generates a sequence of sets of action data (102) to control the agent (104) to perform the task.

13. A system comprising one or more computers and one or more storage devices storing instructions that when executed by the one or more computers cause the one or more computers to perform the operations of the respective method of any one of claims 1 to 12.

14. The system of claim 13 further including: an agent (104) operative to perform commands generated by the neural network (110), and at least one sensor operative to generate state data describing the environment (106), the environment (106) being a real world-environment.

15. One or more computer storage media storing instructions that when executed by one or more computers cause the one or more computers to perform the operations of the respective method of any one of claims 1 to 12.

**Patentansprüche**

1. Computerimplementiertes Verfahren zum Trainieren eines neuronalen Netzes (110) zum Erzeugen von Daten (102) zum Steuern eines Agenten (104) zum Durchführen einer Aufgabe in einer Umgebung (106), wobei die Umgebung (106) eine reale Umgebung ist, der Agent (104) ein elektromechanischer Agent ist und die Aufgabe Interagieren des elektromechanischen Agenten mit der Umgebung umfasst, wobei das Verfahren Folgendes umfasst:

Erlangen von einem oder mehreren ersten Tupeldatensätzen für jede einer Vielzahl von Expertendurchführungen der Aufgabe, wobei jeder erste Tupeldatensatz Zustandsdaten umfasst, die einen Zustand der Umgebung (106) zu einem entsprechenden Zeitpunkt während der entsprechenden Expertendurchführungen der Aufgabe kennzeichnen; und
Durchführen eines gleichzeitigen Prozesses zum Trainieren des neuronalen Netzes (110) und eines Diskriminatornetzes (120), wobei der Prozess Folgendes umfasst:

(i) eine Vielzahl von Aktualisierungsschritten des neuronalen Netzes (110), von denen jeder Folgendes umfasst:

Empfangen von Daten, die einen aktuellen Zustand der Umgebung (106) kennzeichnen;

Verwenden des neuronalen Netzes (110) und der Zustandsdaten, die den aktuellen Zustand der Umgebung (106) kennzeichnen, um Aktionsdaten zu erzeugen, die eine durch den Agenten (104) durchzuführende Aktion angeben;

Bilden eines zweiten Tupeldatensatzes, umfassend die Zustandsdaten;

Verwenden des zweiten Tupeldatensatzes zum Erzeugen eines Belohnungswerts, wobei der Belohnungswert einen Imitationswert umfasst, der durch das Diskriminatornetz (120) basierend auf dem zweiten Tupeldatensatz erzeugt wird; und

Aktualisieren eines oder mehrerer Parameter des neuronalen Netzes (110) basierend auf dem Belohnungswert;

(ii) eine Vielzahl von Aktualisierungsschritten des Diskriminatornetzes, von denen jeder Folgendes umfasst:

Aktualisieren des Diskriminatornetzes (120) basierend auf einer Vielzahl von ersten Tupeldatensätzen und einer Vielzahl von zweiten Tupeldatensätzen, wobei die Aktualisierung darin besteht, jeweilige Imitationswerte, die das Diskriminatornetz (120) beim Empfangen eines beliebigen der Vielzahl von ersten Tupeldatensätzen erzeugt, in Bezug auf jeweilige Imitationswerte zu erhöhen, die das Diskriminatornetz (120) beim Empfangen eines beliebigen der Vielzahl von zweiten Tupeldatensätzen erzeugt;

wobei die Zustandsdaten für jeden Datensatz von Tupeln eines oder mehrere von Objektpositionsdaten, Sensordaten und Bilddaten umfassen, die mindestens ein Bild der Umgebung (106) definieren, **dadurch gekennzeichnet ist, dass**

der Aktualisierungsprozess des Diskriminatornetzes (120) unter der Bedingung durchgeführt wird, dass das aktualisierte Diskriminatornetz (120) beim Empfangen von mindestens einem bestimmten Anteil einer ersten Teilmenge der ersten Tupeldatensätze und/oder mindestens einem bestimmten Anteil einer zweiten Teilmenge der zweiten Tupeldatensätze Imitationswerte erzeugt, die diese Tupeldatensätze falsch etikettieren, wobei die erste Teilmenge der ersten Tupeldatensätze und die zweite Teilmenge der zweiten Tupeldatensätze invariante Tupeldatensätze sind, die weniger Informationen darüber enthalten, wie die Aufgabe durchzuführen ist, als andere der ersten und zweiten Tupeldatensätze.

**2.** Computerimplementiertes Verfahren zum Trainieren eines neuronalen Netzes (110) zum Erzeugen von Aktionsdaten (102) zum Steuern eines Agenten (104) zum Durchführen einer Aufgabe in einer Umgebung (106), wobei der Agent (104) ein elektronischer Agent ist und die Aufgabe den elektronischen Agenten umfasst, der die Betriebsbedingungen von Ausrüstungsgegenständen in einer Anlage oder Serviceeinrichtung steuert, wobei das Verfahren Folgendes umfasst:

Erlangen von einem oder mehreren ersten Tupeldatensätzen für jede einer Vielzahl von Expertendurchführungen der Aufgabe, wobei jeder erste Tupeldatensatz Zustandsdaten umfasst, die einen Zustand der Umgebung (106) zu einem entsprechenden Zeitpunkt während der entsprechenden Expertendurchführungen der Aufgabe kennzeichnen; und

Durchführen eines gleichzeitigen Prozesses zum Trainieren des neuronalen Netzes (110) und eines Diskriminatornetzes (120), wobei der Prozess Folgendes umfasst:

(i) eine Vielzahl von Aktualisierungsschritten für neuronale Netze (110), von denen jeder Folgendes umfasst:

Empfangen von Zustandsdaten, die den aktuellen Zustand der Umgebung kennzeichnen (106);

Verwenden des neuronalen Netzes (110) und der Zustandsdaten, die den aktuellen Zustand der Umgebung (106) kennzeichnen, um Aktionsdaten zu erzeugen, die eine durch den Agenten (104) durchzuführende Aktion angeben;

Bilden eines zweiten Tupeldatensatzes, umfassend die Zustandsdaten;

Verwenden des zweiten Tupeldatensatzes zum Erzeugen eines Belohnungswerts, wobei der Belohnungswert einen Imitationswert umfasst, der durch das Diskriminatornetz (120) basierend auf dem zweiten Tupeldatensatz erzeugt wird; und

Aktualisieren eines oder mehrerer Parameter des neuronalen Netzes (110) basierend auf dem Belohnungswert;

(ii) eine Vielzahl von Aktualisierungsschritten für das Diskriminierungsnetz, von denen jeder Folgendes umfasst:

Aktualisierung des Diskriminatornetzes (120) basierend auf einer Vielzahl von ersten Tupeldatensätzen und einer Vielzahl von zweiten Tupeldatensätzen, wobei die Aktualisierung darin besteht, jeweilige Imitationswerte, die das Diskriminatornetz (120) beim Empfangen eines beliebigen der Vielzahl von ersten Tupeldatensätzen erzeugt, in Bezug auf jeweilige Imitationswerte zu erhöhen, die das Diskriminatornetz (120) beim Empfangen eines beliebigen der Vielzahl von zweiten Tupeldatensätzen erzeugt;

wobei der Aktualisierungsprozess des Diskriminatornetzes (120) unter der Bedingung durchgeführt wird, dass das aktualisierte Diskriminatornetz (120) beim Empfangen von mindestens einem bestimmten Anteil einer ersten Teilmenge der ersten Tupeldatensätze und/oder mindestens einem bestimmten Anteil einer zweiten Teilmenge der zweiten Tupeldatensätze Imitationswerte erzeugt, die diese Tupeldatensätze falsch etikettieren, wobei die erste Teilmenge der ersten Tupeldatensätze und die zweite Teilmenge der zweiten Tupeldatensätze invariante Tupeldatensätze sind, die weniger Informationen darüber enthalten, wie die Aufgabe durchzuführen ist, als andere der ersten und zweiten Tupeldatensätze,

und wobei die Zustandsdaten für jeden Tupeldatensatz Daten von einem oder mehreren Sensoren umfassen, die einen Teil der Anlage oder Serviceeinrichtung überwachen.

3. Computerimplementiertes Verfahren nach Anspruch 1 oder Anspruch 2, bei dem die ersten Tupeldatensätze ferner entsprechende Aktionsdaten beinhalten, die basierend auf dem Zustand der Umgebung (106) zum Steuern des Agenten (102) erzeugt werden, und die zweiten Tupeldatensätze ferner entsprechende Aktionsdaten beinhalten, die basierend auf dem Zustand der Umgebung (106) zum Steuern des Agenten (102) erzeugt werden.

4. Computerimplementiertes Verfahren nach Anspruch 1 oder Anspruch 2, bei dem die ersten Tupeldatensätze keine Aktionsdaten mehr beinhalten und die zweiten Tupeldatensätze keine Aktionsdaten mehr beinhalten, die durch das neuronale Netz (110) erzeugt wurden.

5. Computerimplementiertes Verfahren nach einem der vorhergehenden Ansprüche, bei dem die Einschränkung darin besteht, dass das Diskriminatornetz (120) beim Empfangen von mindestens einem spezifizierten Anteil von Tupeldatensätzen, die in den ersten und zweiten Teilmengen beinhaltet sind, (i) einen Imitationswert unterhalb eines Imitationswert-Schwellenwerts erzeugt, wenn der empfangene Tupeldatensatz ein erster Tupeldatensatz ist, und (ii) einen Imitationswert oberhalb des Imitationswert-Schwellenwerts erzeugt, wenn der empfangene Tupeldatensatz ein zweiter Tupeldatensatz ist, und optional, bei dem die Aktualisierung des Diskriminatornetzes (120) durch Modifizieren von Parametern des Diskriminatornetzes (120) durchgeführt wird, um eine Funktion zu erhöhen, die einen Term beinhaltet, der sich in Abhängigkeit von einem Genauigkeitsparameter invers verändert, wobei der Genauigkeitsparameter (i) einen höheren Wert annimmt, wenn das Diskriminatornetz (120) beim Empfangen einer der ersten Teilmenge der ersten Tupeldatensätze mit einer Wahrscheinlichkeit über einem Wahrscheinlichkeitsschwellenwert einen Imitationswert über dem Imitationswertschwellenwert erzeugt, und (ii) einen höheren Wert annimmt, wenn das Diskriminatornetz (120) beim Empfangen einer der zweiten Teilmenge der zweiten Tupeldatensätze mit einer Wahrscheinlichkeit über dem Wahrscheinlichkeitsschwellenwert einen Imitationswert unter dem Imitationswertschwellenwert erzeugt.

6. Computerimplementiertes Verfahren nach einem der vorhergehenden Ansprüche,

(a) in dem für jede Durchführung der Aufgabe die entsprechenden ersten Tupeldatensätze eine Expertensequenz von ersten Tupeldatensätzen bilden, die durch einen Index etikettiert sind, der für den ersten Tupeldatensatz der Expertensequenz null ist und für jeden nachfolgenden ersten Tupeldatensatz um eins höher ist als für den vorhergehenden der Expertensequenz, und
(b) wobei die Aktualisierungsschritte des neuronalen Netzes (110) basierend auf einer oder mehreren Aktionssequenzen von zweiten Tupeln erfolgen, wobei für jede Aktionssequenz von zweiten Tupeln:

ein erstes zweites Tupel der Aktionssequenz einen Zeitindex von Null aufweist und für Zustandsdaten durchgeführt wird, die die Umgebung (106) in einem entsprechenden Ausgangszustand beschreiben, und jedes der anderen zweiten Tupel der Aktionssequenz einen Zeitindex aufweist, der um eins größer ist als das vorhergehende zweite Tupel der Aktionssequenz, und für Zustandsdaten durchgeführt wird, die die Umgebung (106) bei der Durchführung der im vorhergehenden Zeitschritt erzeugten Aktionsdaten durch den Agenten (104) beschreiben, und in dem optional in jedem der Aktualisierungsschritte des Diskriminatornetzes (120),
die erste Teilmenge der ersten Tupeldatensätze erste Tupeldatensätze sind, für die der entsprechende Index unter einem ersten Schwellenwert liegt, und
die zweite Teilmenge der zweiten Tupeldatensätze Tupeldatensätze sind, für die der entsprechende Index unter einem zweiten Schwellenwert liegt.

7. Computerimplementiertes Verfahren nach Anspruch 6, bei dem alle in jedem Aktualisierungsschritt des Diskriminatornetzes (120) verwendeten zweiten Tupeldatensätze Tupeldatensätze sind, für die der entsprechende Zeitindex unter einem dritten Zeitschwellenwert liegt, wobei die in dem Diskriminatornetz (120) verwendeten Expertensequenzen einschließlich erster Tupel mit einem Zeitindex über dem dritten Zeitschwellenwert aktualisiert werden.

8. Computerimplementiertes Verfahren nach Anspruch 6, bei dem für jede Aktionssequenz ein entsprechender dritter Zeitschwellenwert bestimmt wird und die zweiten Tupeldatensätze der Aktionssequenz, die in jedem Diskriminatornetz (120) verwendet werden, in jedem Aktualisierungsschritt nur zweite Tupeldatensätze beinhalten, für die der entsprechende Zeitindex unter einem entsprechenden dritten Zeitschwellenwert liegt, und optional umfassend einen Schritt, bei dem für jede Aktionssequenz der dritte Zeitschwellenwert für die Aktionssequenz basierend auf Imitationswerten für mindestens eine Vielzahl von Datensätzen des zweiten Tupels der Aktionssequenz ausgewählt wird, wobei optional der dritte Zeitschwellenwert als der kleinste Zeitindex eingestellt wird, sodass eine bestimmte Anzahl $T_{patience}$ der aktuellsten Imitationswerte über einem Imitationsqualitätsschwellenwert liegt, wobei optional der Qualitätsschwellenwert für die Imitation basierend auf den Imitationswerten einer Vielzahl von zweiten Tupeln dieser Aktionssequenz ist, die einen Zeitindex unterhalb des dritten Zeitschwellenwerts aufweist.

9. Computerimplementiertes Verfahren nach einem der vorhergehenden Ansprüche, bei dem während mindestens eines von (i) einem oder mehreren Aktualisierungsschritten des neuronalen Netzes (110) eine modifizierte Form der zweiten Tupeldatensätze erzeugt wird, indem eine Modifikation an den Zustandsdaten der zweiten Tupeldatensätze vorgenommen wird, und (ii) einem oder mehreren Aktualisierungsschritten des Diskriminatornetzes (120) eine modifizierte Form der ersten und/oder zweiten Tupeldatensätze durch Vornehmen einer Modifikation an den Zustandsdaten eines oder mehrerer der ersten und/oder zweiten Tupeldatensätze erzeugt wird.

10. Computerimplementiertes Verfahren nach Anspruch 9, bei dem die Modifikation das Anwenden einer oder mehrerer Modifikationen auf die Bilddaten umfasst, die aus dem Satz ausgewählt werden, der Folgendes umfasst: Änderungen der Helligkeit, Änderungen des Kontrasts, Änderungen der Sättigung, Zuschneiden, Drehen und Hinzufügen von Rauschen.

11. Computerimplementiertes Verfahren nach Anspruch 9 oder 10, wenn abhängig von Anspruch 14, wobei die Modifikation das Entfernen der Bilddaten für eines oder mehrere der Bilder der Zustandsdaten umfasst.

12. Computerimplementiertes Verfahren zum Durchführen einer Aufgabe, wobei das Verfahren Folgendes umfasst:

Trainieren eines neuronalen Netzes (110) zum Erzeugen von Befehlen zum Steuern eines Agenten (104) zum Durchführen der Aufgabe in einer Umgebung durch ein Verfahren nach einem der vorhergehenden Ansprüche; und
eine Vielzahl von Malen Durchführen der folgenden Schritte:

(i) Erlangen von Zustandsdaten, die den aktuellen Zustand der Umgebung beschreiben;
(ii) Übertragen der Zustandsdaten an das neuronale Netz (110), wobei das neuronale Netz (110) Aktionsdaten (102) basierend auf den Zustandsdaten erzeugt; und
(iii) Übertragen der Aktionsdaten (102) an den Agenten (104), wobei der Agent (104) betriebsfähig ist, um eine durch die Aktionsdaten (102) definierte Aktion innerhalb der Umgebung (106) durchzuführen;

wodurch das neuronale Netz (110) nacheinander eine Sequenz von Sätzen von Aktionsdaten (102) zum Steuern des Agenten (104) zum Durchführen der Aufgabe erzeugt.

13. System, umfassend einen oder mehrere Computer und eine oder mehrere Speichervorrichtungen, der/die Anweisungen speichert/speichern, die, wenn sie von dem einen oder den mehreren Computern ausgeführt werden, den einen oder die mehreren Computer dazu veranlassen, die Vorgänge des jeweiligen Verfahrens nach einem der Ansprüche 1 bis 12 durchzuführen.

14. System nach Anspruch 13, ferner beinhaltend: einen Agenten (104), betriebsfähig zum Durchführen von Befehlen, die durch das neuronale Netz (110) erzeugt werden, und mindestens einen Sensor, betriebsfähig zum Erzeugen von Zustandsdaten, die die Umgebung (106) beschreiben, wobei die Umgebung (106) eine reale Umgebung ist.

**15.** Ein oder mehrere Computerspeichermedien, die Anweisungen speichern, die, wenn sie durch einen oder mehrere Computer ausgeführt werden, den einen oder die mehreren Computer dazu veranlassen, die Vorgänge des jeweiligen Verfahrens nach einem der Ansprüche 1 bis 12 durchzuführen.

**Revendications**

**1.** Procédé mis en œuvre par ordinateur pour former un réseau neuronal (110) à générer des données d'action (102) pour commander un agent (104) afin d'exécuter une tâche dans un environnement (106), dans lequel l'environnement (106) est un environnement du monde réel, l'agent (104) est un agent électromécanique, et la tâche comprend l'interaction de l'agent électromécanique avec l'environnement, le procédé comprenant :

l'obtention, pour chacune d'une pluralité de performances d'experts de la tâche, d'un ou de plusieurs premiers ensembles de données de tuple, chaque premier ensemble de données de tuple comprenant des données d'état caractérisant un état de l'environnement (106) à un moment correspondant pendant la performance d'expert correspondante de la tâche ; et
l'exécution d'un processus simultané de formation du réseau neuronal (110) et d'un réseau discriminateur (120), le processus comprenant :

(i) une pluralité d'étapes de mise à jour de réseau neuronal (110), dont chacune comprend :

la réception de données d'état caractérisant un état actuel de l'environnement (106) ;
l'utilisation du réseau neuronal (110) et des données d'état caractérisant l'état actuel de l'environnement (106) pour générer des données d'action indiquant une action à exécuter par l'agent (104) ;
la formation d'un second ensemble de données de tuple comprenant les données d'état ;
l'utilisation du second ensemble de données de tuple pour générer une valeur de récompense, dans lequel la valeur de récompense comprend une valeur d'imitation générée par le réseau discriminateur (120) en fonction du second ensemble de données de tuple ; et
la mise à jour d'un ou de plusieurs paramètres du réseau neuronal (110) en fonction de la valeur de récompense ;

(ii) une pluralité d'étapes de mise à jour du réseau discriminateur, chacune comprend :

la mise à jour du réseau discriminateur (120) en fonction d'une pluralité des premiers ensembles de données de tuple et une pluralité des seconds ensembles de données de tuple, la mise à jour étant destinée à augmenter les valeurs d'imitation respectives que le réseau discriminateur (120) génère lors de la réception de l'un quelconque de la pluralité des premiers ensembles de données de tuple par rapport aux valeurs d'imitation respectives que le réseau discriminateur (120) génère lors de la réception de l'un quelconque de la pluralité des seconds ensembles de données de tuple ;
dans lequel les données d'état pour chaque ensemble de données de tuple comprennent une ou plusieurs données de position d'objet, des données de capteur et des données d'image définissant au moins une image de l'environnement (106),
**caractérisé en ce que**
le processus de mise à jour du réseau discriminateur (120) est exécuté sous réserve d'une contrainte selon laquelle le réseau discriminateur mis à jour (120), lors de la réception d'au moins une certaine proportion d'un premier sous-ensemble des premiers ensembles de données de tuple et/ou d'au moins une certaine proportion d'un second sous-ensemble des seconds ensembles de données de tuple, génère des valeurs d'imitation qui étiquettent de manière incorrecte ces ensembles de données de tuple, le premier sous-ensemble des premiers ensembles de données de tuple et le second sous-ensemble des seconds ensembles de données de tuple étant des ensembles de données de tuple invariants qui sont moins informatifs sur la manière d'exécuter la tâche que d'autres des premier et second ensembles de données de tuple respectivement.

**2.** Procédé mis en œuvre par ordinateur pour former un réseau neuronal (110) à générer des données d'action (102) pour commander un agent (104) afin d'exécuter une tâche dans un environnement (106), dans lequel l'agent (104) est un agent électronique, et la tâche comprend la commande de l'agent électronique des conditions de fonctionnement d'éléments d'équipement dans une usine ou une installation de service, le procédé comprenant :

l'obtention, pour chacune d'une pluralité de performances d'experts de la tâche, d'un ou de plusieurs premiers ensembles de données de tuple, chaque premier ensemble de données de tuple comprenant des données d'état caractérisant un état de l'environnement (106) à un moment correspondant pendant la performance d'expert correspondante de la tâche ; et

l'exécution d'un processus simultané de formation du réseau neuronal (110) et d'un réseau discriminateur (120), le processus comprenant :

(i) une pluralité d'étapes de mise à jour de réseau neuronal (110), dont chacune comprend :

la réception des données d'état caractérisant un état actuel de l'environnement (106) ;
l'utilisation du réseau neuronal (110) et des données d'état caractérisant l'état actuel de l'environnement (106) pour générer des données d'action indiquant une action à exécuter par l'agent (104) ;
la formation d'un second ensemble de données de tuple comprenant les données d'état ;
l'utilisation du second ensemble de données de tuple pour générer une valeur de récompense, dans lequel la valeur de récompense comprend une valeur d'imitation générée par le réseau discriminateur (120) en fonction du second ensemble de données de tuple ; et
la mise à jour d'un ou de plusieurs paramètres du réseau neuronal (110) en fonction de la valeur de récompense ;

(ii) une pluralité d'étapes de mise à jour du réseau discriminateur, chacune comprend :

la mise à jour du réseau discriminteur (120) en fonction d'une pluralité d'ensembles de données de premier tuple et d'une pluralité d'ensembles de données de second tuple, la mise à jour consistant à augmenter les valeurs d'imitation respectives que le réseau discriminateur (120) génère lors de la réception de l'un quelconque de la pluralité des premiers ensembles de données de tuple par rapport aux valeurs d'imitation respectives que le réseau discriminateur (120) génère lors de la réception de l'un quelconque des ensembles de données de second tuple ;
dans lequel le processus de mise à jour du réseau discriminateur (120) est exécuté sous réserve d'une contrainte selon laquelle le réseau discriminateur mis à jour (120), lors de la réception d'au moins une certaine proportion d'un premier sous-ensemble des premiers ensembles de données de tuple et/ou d'au moins une certaine proportion d'un second sous-ensemble des seconds ensembles de données de tuple, génère des valeurs d'imitation qui étiquettent de manière incorrecte ces ensembles de données de tuple, le premier sous-ensemble des premiers ensembles de données de tuple et le second sous-ensemble des seconds ensembles de données de tuple étant des ensembles de données de tuple invariants qui sont moins informatifs sur la manière d'exécuter la tâche que d'autres des premier et second ensembles de données de tuple respectivement,
et dans lequel les données d'état pour chaque ensemble de données de tuple comprennent des données provenant d'un ou de plusieurs capteurs surveillant une partie de l'usine ou de l'installation de service.

3. Procédé mis en œuvre par ordinateur selon la revendication 1 ou la revendication 2, dans lequel les premiers ensembles de données de tuple comportent également des données d'action correspondantes générées en fonction de l'état de l'environnement (106) pour commander l'agent (102), et les seconds ensembles de données de tuple comportent également des données d'action correspondantes générées en fonction de l'état de l'environnement (106) pour commander l'agent (102).

4. Procédé mis en œuvre par ordinateur selon la revendication 1 ou la revendication 2, dans lequel les premiers ensembles de données de tuple ne comportent pas également de données d'action, et les seconds ensembles de données de tuple ne comportent pas également de données d'action générées par le réseau neuronal (110).

5. Procédé mis en œuvre par ordinateur selon une quelconque revendication précédente, dans lequel la contrainte est que, lors de la réception d'au moins une proportion spécifiée d'ensembles de données de tuples inclus dans les premier et second sous-ensembles, le réseau discriminateur (120) génère (i) une valeur d'imitation inférieure à un seuil de valeur d'imitation si l'ensemble de données de tuples reçu est un premier ensemble de données de tuples, et (ii) une valeur d'imitation supérieure au seuil de valeur d'imitation si l'ensemble de données de tuples reçu est un second ensemble de données de tuples, et éventuellement dans lequel la mise à jour du réseau discriminateur (120) est exécutée en modifiant les paramètres du réseau discriminateur (120) pour augmenter une fonction qui comporte un terme qui varie inversement en fonction d'un paramètre de précision, le paramètre de précision (i) prenant une valeur plus élevée si, lors de la réception d'un des premiers sous-ensembles de premiers ensembles de données de tuples, le réseau discriminateur (120) génère avec une probabilité supérieure à un seuil de probabilité une valeur d'imitation supérieure au seuil de valeur d'imitation, et (ii) prenant une valeur plus élevée si, lors de la réception d'un des seconds sous-ensemble de seconds ensembles de données de tuple, le réseau discriminateur (120) génère avec une probabilité supérieure au seuil de probabilité une valeur d'imitation inférieure au seuil de valeur d'imitation.

**6.** Procédé mis en œuvre par ordinateur selon une quelconque revendication précédente,

(a) dans lequel, pour chaque performance de la tâche, les premiers ensembles de données de tuple correspondants forment une séquence experte de premiers ensembles de données de tuple étiquetés par un indice de temps qui est nul pour le premier ensemble de données de tuple de la séquence experte, et un plus élevé pour chaque premier ensemble de données de tuple successif que pour le précédent de la séquence experte, et
(b) les étapes de mise à jour du réseau neuronal (110) sont basées sur une ou plusieurs séquences d'actions de seconds tuples, dans lequel pour chaque séquence d'actions de seconds tuples :

un premier second tuple de la séquence d'action a un indice de temps de zéro, et est exécuté pour des données d'état décrivant l'environnement (106) dans un état initial correspondant, et
chacun des autres seconds tuples de la séquence d'action a un indice de temps supérieur d'une unité au second tuple précédent de la séquence d'action, et est exécuté pour des données d'état décrivant l'environnement (106) lors de l'exécution par l'agent (104) des données d'action générées dans l'étape de temps précédente, et éventuellement dans lequel, dans chacune des étapes de mise à jour du réseau discriminateur (120),
le premier sous-ensemble de premiers ensembles de données de tuples sont des premiers ensembles de données de tuples pour lesquels l'indice de temps correspondant est inférieur à un premier seuil de temps, et le second sous-ensemble des seconds ensembles de données de tuples sont des ensembles de données de tuples pour lesquels l'indice de temps correspondant est inférieur à un deuxième seuil de temps.

**7.** Procédé mis en œuvre par ordinateur selon la revendication 6, dans lequel tous les seconds ensembles de données de tuple employés dans chaque étape de mise à jour du réseau discriminateur (120) sont des ensembles de données de tuple pour lesquels l'indice de temps correspondant est inférieur à un troisième seuil de temps, les séquences expertes employées dans la mise à jour du réseau discriminateur (120) comportant des premiers tuples ayant un indice de temps supérieur au troisième seuil de temps.

**8.** Procédé mis en œuvre par ordinateur selon la revendication 6, dans lequel, pour chaque séquence d'action, un troisième seuil de temps correspondant est déterminé, et les seconds ensembles de données de tuple de la séquence d'action utilisés dans chaque étape de mise à jour du réseau discriminateur (120) comportent uniquement des seconds ensembles de données de tuple pour lesquels l'indice de temps correspondant est inférieur à un troisième seuil de temps correspondant, et comprenant éventuellement une étape consistant, pour chaque séquence d'action, à sélectionner le troisième seuil de temps pour la séquence d'action en fonction des valeurs d'imitation pour au moins une pluralité des seconds ensembles de données de tuple de la séquence d'action, dans lequel, éventuellement, le troisième seuil de temps est défini comme le plus petit indice de temps tel qu'un certain nombre $T_{ratience}$ des valeurs d'imitation les plus récentes soit supérieur à un seuil de qualité d'imitation, dans lequel, éventuellement, le seuil de qualité d'imitation est basé sur les valeurs d'imitation d'une pluralité de seconds tuples de cette séquence d'action ayant un indice de temps inférieur au troisième seuil de temps.

**9.** Procédé mis en œuvre par ordinateur selon une quelconque revendication précédente, dans lequel, pendant au moins l'une parmi (i) une ou plusieurs des étapes de mise à jour du réseau neuronal (110), une forme modifiée des seconds ensembles de données de tuple est générée en apportant une modification aux données d'état des seconds ensembles de données de tuple, et (ii) une ou plusieurs des étapes de mise à jour du réseau discriminateur (120), une forme modifiée des premier et/ou second ensembles de données de tuple est générée en apportant une modification aux données d'état d'un ou de plusieurs des premier et/ou second ensembles de données de tuple.

**10.** Procédé mis en œuvre par ordinateur selon la revendication 9, dans lequel la modification comprend l'application aux données d'image d'une ou de plusieurs modifications sélectionnées dans l'ensemble comprenant : des changements de luminosité ; des changements de contraste ; des changements de saturation ; un recadrage ; une rotation ; et l'ajout de bruit.

11. Procédé mis en œuvre par ordinateur selon les revendications 9 ou 10 lorsqu'elles dépendent de la revendication 14, dans lequel la modification comprend la suppression des données d'image pour une ou plusieurs des images des données d'état.

12. Procédé mis en œuvre par ordinateur pour exécuter une tâche, le procédé comprenant :

la formation d'un réseau neuronal (110) à générer des commandes pour commander un agent (104) pour exécuter la tâche dans un environnement, par un procédé selon une quelconque revendication précédente ; et une pluralité de fois pour exécuter les étapes consistant à :

(i) obtenir des données d'état décrivant un état actuel de l'environnement ;
(ii) transmettre les données d'état au réseau neuronal (110), le réseau neuronal (110) générant des données d'action (102) sur la base des données d'état ; et
(iii) transmettre les données d'action (102) à l'agent (104), l'agent (104) étant opérationnel pour exécuter une action définie par les données d'action (102) dans l'environnement (106) ;

moyennant quoi le réseau neuronal (110) génère successivement une séquence d'ensembles de données d'action (102) pour commander l'agent (104) afin d'exécuter la tâche.

13. Système comprenant un ou plusieurs ordinateurs et un ou plusieurs dispositifs de stockage stockant des instructions qui, lorsqu'elles sont réalisées par les un ou plusieurs ordinateurs, amènent les un ou plusieurs ordinateurs à exécuter les opérations du procédé respectif selon l'une quelconque des revendications 1 à 12.

14. Système selon la revendication 13 comportant également : un agent (104) opérationnel pour exécuter des commandes générées par le réseau neuronal (110), et au moins un capteur opérationnel pour générer des données d'état décrivant l'environnement (106), l'environnement (106) étant un environnement du monde réel.

15. Un ou plusieurs supports de stockage informatique stockant des instructions qui, lorsqu'elles sont réalisées par un ou plusieurs ordinateurs amènent les un ou plusieurs ordinateurs à exécuter les opérations du procédé respectif selon l'une quelconque des revendications 1 à 12.

100

Discriminator 120

Neural network update unit 124

Action
102

Neural network 110

Agent
104

Environment
106

Observation
108

Fig. 1

200

Discriminator update unit 206

D

Discriminator 120

First tuple database 202

$\{s_e, a_e\}$

Second tuple database 204

$\{s_\theta, a_\theta\}$

Fig. 2

<u>300</u>

Discriminator update unit 306

Discriminator 120

First tuple
database 302

$\{s_e, a_e\}$

$\{\hat{s}_e, \hat{a}_e\}$

Second tuple
database 304

$\{s_\theta, a_\theta\}$

$\{\hat{s}_\theta, \hat{a}_\theta\}$

Fig. 3

Fig. 4

500

Discriminator update unit 506

Discriminator 420

First tuple
database 502

$\{s_e\}$

$\{\hat{s}_e\}$

Second tuple
database 504

$\{s_\theta\}$

$\{\hat{s}_\theta\}$

Fig. 5

Fig. 6

603

Obtain, for each of a plurality of
performances of the task, one or more first
tuples, each first tuple comprising state data
characterizing a state of the environment at
a corresponding time during the
performance of the task — 601

Neural network update step — 602

Discriminator network update step, the
update increasing the ability of the network
to distinguish between the first and second
tuples, subject to a constraint of not being
able to distinguish between the invariant
first and second tuples — 603

604

No — Stop criterion met?

Yes

End — 605

Fig. 7

602

Set t=0 — 6020

↓

Receive state data characterizing a current state of the environment at time t — 6021

↓

The neural network uses the state data to generate action data indicative of an action to be performed by the agent — 6022

↓

Form a second tuple comprising the state data — 6023

↓

Use the second tuple dataset to generate a reward value comprising an imitation value generated by the discriminator network based on the second tuple — 6024

↓

Update one or more parameters of the neural network based on the reward value — 6025

↓

Termination criterion reached? — 6026

No

t is increased by 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019126472 A1

**Non-patent literature cited in the description**

- **J. HO** ; **S. ERMON**. Generative Adversarial Imitation Learning. *Advances in Neural Information Processing Systems*, 2016, 4565-4573